# FASCICULE DE BREVET EUROPEEN

(11) **EP 1 771 230 B1**
(45) Date de publication et mention de la délivrance du brevet: **26.08.2009**
(21) Numéro de dépôt: 05793487.9
(22) Date de dépôt: 27.07.2005
(51) Int. Cl.: A63C 5/12, A63C 5/00, A63C 5/044, B29C 70/46, B29C 70/34

(54) **PROCÉDÉ DE FABRICATION D'UN ENGIN DE GLISSE SUR NEIGE OU SUR GLACE ET STRUCTURE DE L'ENGIN OBTENUE PAR LE PROCÉDÉ**
VERFAHREN ZUR HERSTELLUNG EINER VORRICHTUNG ZUM GLEITEN AUF SCHNEE ODER EIS UND STRUKTUR FÜR DAMIT HERGESTELLTE VORRICHTUNG
METHOD OF PRODUCING A DEVICE FOR SLIDING ON SNOW OR ICE AND STRUCTURE OF DEVICE THUS PRODUCED

(30) Priorité: 30.07.2004 FR 0408420
(43) Date de publication de la demande: 11.04.2007
(73) Titulaire: SALOMON S.A.S., 74370 Metz-Tessy (FR)
(72) Inventeur: FRANCOIS, Jérôme, F-73100 Aix les Bains (FR)
(74) Mandataire: Rambaud, Pascal
(86) Numéro de dépôt international: PCT/FR2005/001970
(87) Numéro de publication internationale: WO 2006/024753

(56) Documents cités:
- DE-A1- 10 204 396
- US-A- 4 469 543
- US-A- 5 544 908
- DOW PLASTICS: "Technical Information on Isoplast 101"[Online] août 1996 (1996-08), XP002321252 Extrait de l'Internet: URL:http://www.dow.com/webapps/lit/litorde r.asp?filepath=engineeringplastics/pdfs/no reg/306-00322.pdf&pdf=true> [extrait le 2005-03-14]

## Description

L'invention concerne un procédé de fabrication d'un engin de glisse sur neige ou sur glace et la structure de l'engin obtenue par le procédé.

Dans le domaine du ski alpin, on utilise des skis qui ont des structures composites formées par la superposition de couches de part et d'autre d'un noyau. La couche inférieure de cette structure est formée par la semelle de glisse qui est bordée latéralement par les carres, et la couche supérieure est formée par la couche externe de décor.

Parmi les couches intermédiaires de la structure il y a des couches de renfort. Ces couches sont généralement en matériau composite. Usuellement on réalise ces couches à partir d'une nappe de fibres noyée dans une résine polymérisable. Ces couches sont préimprégnées c'est-à-dire que l'imprégnation de résine est réalisée dans une phase préalable, et que les couches sont stockées ainsi avant leur utilisation pour la fabrication d'un ski. En outre, pour faciliter la manipulation de ces couches par exemple pour l'opération de découpe et pour la mise en place dans le moule, on conserve les couches dans un état où la résine est figée.

Il existe plusieurs familles de résine, et habituellement ces couches sont réalisées avec des résines de type thermodurcissable, par exemple une résine polyester, époxyde ou polyuréthane.

Ces résines possèdent de bonnes propriétés mécaniques, toutefois leur inconvénient réside dans le fait que la polymérisation est de type irréversible et qu'elle se produit à une température de cuisson relativement élevée. Le stockage et la conservation des couches préimprégnées se font pour cette raison à basse température afin d'empêcher la réaction de polymérisation de se déclencher. Une fois amenées à température ambiante, les couches préimprégnées ont un temps de conservation limité.

La demande de brevet EP 428 886 propose un procédé de fabrication d'un ski avec un noyau injecté. Ce procédé met en oeuvre une résine thermodurcissable ou une résine de type thermoplastique, c'est-à-dire qu'il met sur le même plan les deux types de résine. Parmi les résines thermoplastiques citées ce document propose les polyamides, les polycarbonates ou les PEI (polyéther imide).

La demande de brevet US 5,544,908 propose quant à elle de réaliser un ski avec des couches de renfort à matrice thermoplastique.

Un exemple de résine thermoplastique est connue par le produit de la société "Dow Plastics" référencé "Isoplast 101".

L'utilisation d'une résine de type thermoplastique est avantageuse car la transformation est réversible.

Dans ces conditions le stockage des couches de résine préimprégnées est moins contraignant, en outre, comme cela est décrit dans l'un ou l'autre de ces documents, on peut réaliser aisément une mise en forme de l'ensemble de renfort supérieur, notamment pour réaliser la coque supérieure d'un ski à coque. Cette coque comprend la face supérieure du ski et les deux faces latérales.

Le problème des résines thermoplastiques réside dans le rapport existant entre leurs propriétés mécaniques et leur température de transformation au-delà de laquelle la résine ramollit.

Par exemple les résines de type polyamide ont aujourd'hui des propriétés mécaniques insuffisantes pour la réalisation d'un ski. D'un autre côté les résines PET (polyéther terephtalate) ont de bonnes propriétés mécaniques mais une température élevée de transformation. Les résines PEEK (polyéther-éther-cétone) sont très bonnes mécaniquement mais de nouveau leur température de transformation est trop élevée.

Pour ces raisons très peu de skis sont fabriqués actuellement avec des couches de renfort ayant une matrice thermoplastique.

Compte tenu de cet exposé de l'art antérieur il existe un besoin pour un procédé de fabrication d'un ski ayant des couches de renfort à matrice thermoplastique dont les propriétés mécaniques des couches de renfort sont améliorées par rapport aux skis existants.

Ainsi, selon l'invention le procédé de fabrication d'un engin de glisse comprend une étape de superposition dans un moule d'un sous-ensemble inférieur, d'un noyau et d'un sous-ensemble supérieur. Il est caractérisé par le fait qu'il comprend une étape préalable de réalisation d'une couche de renfort composite formée par un renfort noyé dans une matrice de résine thermoplastique où la résine est de type PU (polyuréthane) ayant un module d'Young propre supérieur à 1 500 MPa, de préférence 2 000 MPa.

L'invention sera mieux comprise en se référant à la description ci-dessous et aux dessins en annexe qui lui sont attachés.
La figure 1 montre un ski.
La figure 2 représente une vue en section du ski de la figure 1.
La figure 3 est une vue schématique de la fabrication d'une couche de renfort selon un premier mode de mise en oeuvre de l'invention.
Les figures 4 et 5 sont relatives à des variantes de mise en oeuvre.
La figure 6 illustre une phase ultérieure du procédé.

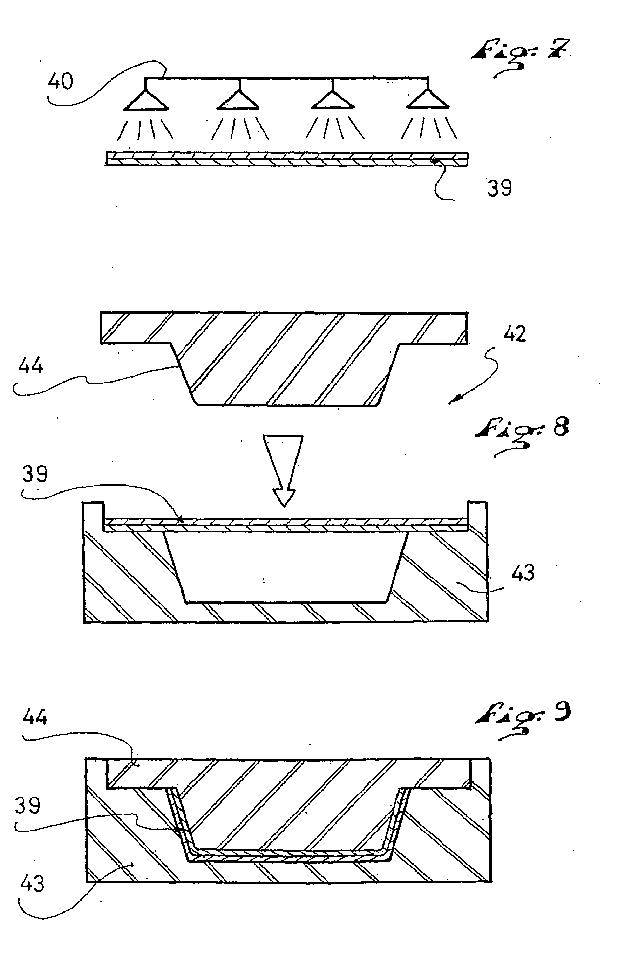

La figure 7 montre une autre phase du procédé.

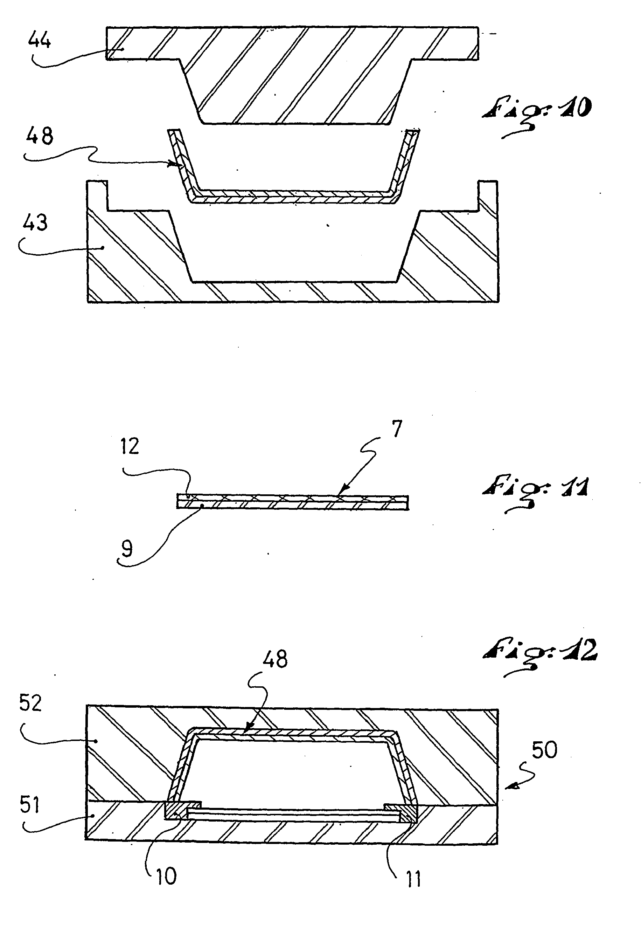

Les figures 8 à 10 montrent différentes étapes de mise en forme de la coque du ski de la figure 1.
La figure 11 montre le sous-ensemble inférieur du ski de la figure 1.
Les figures 12 et 13 schématisent l'étape d'injection du noyau.
Les figures 14 et 15 illustrent des variantes de mise en oeuvre de l'invention.

L'invention va maintenant être décrite en relation avec la fabrication d'un ski à coque.
Cette application n'est pas limitative, et l'invention s'applique à d'autres types de construction, notamment les constructions de type sandwich ou caisson.

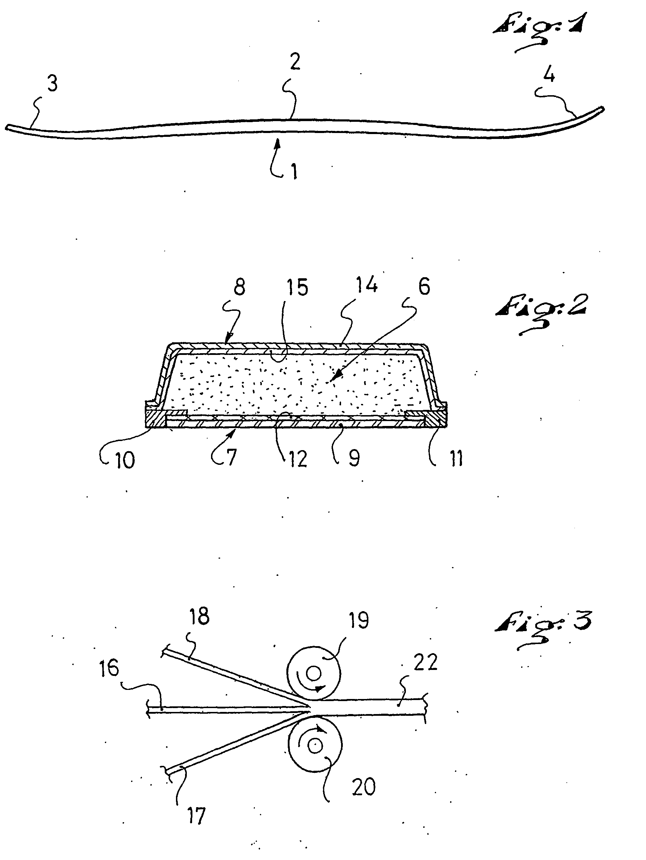

En se référant à la figure 1, le ski 1 représenté est une poutre allongée comprenant une zone centrale 2 ou patin, une spatule recourbée 3 et un talon 4. Dans le sens de la longueur la poutre est cambrée, avec un patin surélevé par rapport à un plan horizontal sur lequel reposerait le ski.

En section la structure du ski est formée par un noyau central 6 qui repose sur un sous-ensemble inférieur 7 et qui est recouvert d'un sous-ensemble supérieur 8. Le noyau forme une sorte d'entretoise entre les deux sous-ensembles. Il sera décrit plus en détail ultérieurement.

De façon classique le sous-ensemble inférieur comprend une semelle de glisse inférieure 9 bordée de deux carres latérales 10 et 11. La semelle de glisse est en tout matériau approprié, par exemple en polyéthylène éventuellement chargé de poudres additionnelles.

La semelle de glisse est recouverte par la structure de renfort inférieure 12 qui comprend une ou plusieurs couches de renfort superposées. La ou les couches de renfort sont de tout type approprié. Par exemple elles sont formées par un renfort en fibres noyé dans une matrice de résine, ou encore en des lames métalliques. Pour une couche de renfort composite, on peut utiliser un renfort formé par des nappes de fibres tissées selon une ou plusieurs directions ou des nappes de non tissé ou une superposition de plusieurs de ces couches. On peut également utiliser des grilles ou des voiles. Comme fibres on peut prendre des fibres de verre, de carbone, d'aramide ou tout autre matière appropriée. Les renforts peuvent mettre en oeuvre des fibres de nature différente. Comme renfort en métal on peut utiliser une lame en alliage d'aluminium, en acier ou en métal amorphe.

Le sous-ensemble supérieur comprend une couche externe de décor qui est par exemple réalisée en une matière thermoplastique, notamment en polyuréthane, polyamide-11, polyamide-12, ou autres, ou encore en ABS ou en ABS / PU. La couche de décor peut être complexe c'est-à-dire être formée de la superposition de films unitaires. Elle est décorée par tout moyen approprié, notamment par sérigraphie ou par sublimation.

Sous la couche de décor 14 le sous-ensemble supérieur 8 comprend une structure de renfort supérieure 15 formée d'une ou plusieurs couches de renfort. Comme pour le sous-ensemble inférieur, les couches de renfort peuvent être composites ou métalliques ou une combinaison de ces matières.

A noter que pour les couches de renfort inférieure et supérieure on peut avoir localement des feuilles de renfort additionnelles, notamment dans la zone du patin.

Selon l'invention, dans une étape préalable à la fabrication du ski dans le moule on réalise une couche de renfort comprenant un renfort en fibres noyé dans une matrice de résine thermoplastique, la résine étant de type polyuréthane.

On connaît des résines thermodurcissables de type polyuréthane. Une résine polyuréthane thermoplastique se distingue de cette résine thermodurcissable par une structure linéaire des molécules et un poids moléculaire élevé. Dans le cas présent la résine polyuréthane est formée d'un mélange d'isocyanate et de polyol. De préférence la résine polyuréthane utilisée est seulement de type polyol base polyester, c'est-à-dire sans polyol base polyéther. La résine présente un poids moléculaire élevé qui est lié à une chaîne moléculaire très longue.

Il est connu d'utiliser un polyuréthane thermoplastique comme matière plastique afin de réaliser des pièces moulées par injection mais l'utilisation est ici différente du fait de la présence d'un renfort et du module d'Young élevé de la matrice.

La résine polyuréthane est en effet choisie avec un module d'Young supérieur à 1 500 et de préférence 2 000 MPa (Méga Pascal). Armée de fibres de verre longues, le composite atteint un module de flexion de l'ordre de 35 000 à 40 000 MPa, ce qui est comparable au module de flexion d'un composite à matrice de type thermodurcissable.

Ces performances sont obtenues avec un taux volumique de fibres de 55% environ. Ces valeurs ne sont pas limitatives.

On pourrait utiliser également des fibres de carbone, d'aramide, ou autres fibres synthétiques ou un mélange de ces fibres pour réaliser le renfort.

Selon une première technique de fabrication illustrée en figure 3, la couche de renfort est réalisée par un complexage de films de différente nature, en l'occurrence un renfort formé par une nappe ou un tissu de fibres 16 et au-dessus et en-dessous de ce renfort un film de polyuréthane thermoplastique 17, 18. L'ensemble est chauffé et comprimé entre des rouleaux de calandrage 19 et 20, par exemple à une température de 230 degrés sous une pression de 16 à 20 bars. Ces chiffres n'ont qu'une valeur indicative. En sortie après refroidissement on obtient une sorte de tôle 22 dont l'épaisseur est comprise entre 0,4 à 1 millimètre. Ces valeurs ne sont pas limitatives, et l'épaisseur de la tôle peut atteindre 10 millimètres en multipliant le nombre de films et de renforts superposés. Toutefois pour la fabrication d'un ski on préfère se limiter à une épaisseur de tôle de l'ordre de 1 millimètre.

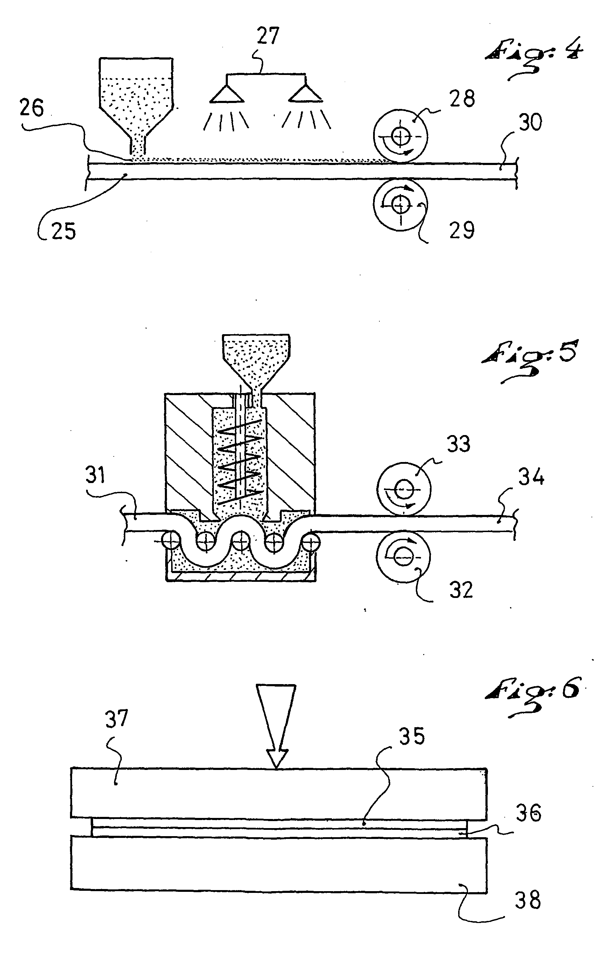

Selon une autre technique schématisée en figure 4, la nappe ou le tissu de fibres 25 reçoit une poudre de polyuréthane thermoplastique 26, et l'ensemble est chauffé par exemple sous une rampe à infrarouges 27 pour mettre la résine en fusion puis comprimé entre des rouleaux de calandrage 28, 29 pour forcer la pénétration de la résine dans le renfort. Le poudrage peut être réalisé sur les deux faces du renfort. Le produit final 30 présente sensiblement les mêmes propriétés que précédemment.

Selon un troisième mode de mise en oeuvre on opère par pultrusion c'est-à-dire que la nappe ou le tissu du renfort traverse une filière dans laquelle on injecte la résine polyuréthane à l'état de fusion. Après imprégnation de résine le produit en sortie est calibré en épaisseur.

Selon l'invention au moins une des couches de renfort est réalisée avec une résine polyuréthane thermoplastique. C'est-à-dire qu'une au moins des couches de renfort est réalisée à partir de la tôle précédente. C'est de préférence la couche de renfort du sous-ensemble supérieur qui est réalisée de cette façon. La couche de renfort du sous-ensemble inférieur peut être réalisée de la même façon avec une matrice thermoplastique. Ou encore la couche de renfort inférieure peut présenter une structure traditionnelle, c'est-à-dire un renfort noyé dans une matrice thermodurcissable, par exemple de type époxy, ou encore un renfort métallique.

Les étapes suivantes de la fabrication du ski se déroulent selon un processus connu.

On réalise dans un premier temps le sous-ensemble supérieur. Pour cela la couche de renfort externe et au moins une couche de renfort sont découpées à longueur, superposées et assemblées par une application de chaleur et de pression entre deux plateaux. La découpe à la largeur du ski peut se faire avant ou après cette opération d'assemblage.

La figure 5 montre de façon schématique cette opération. La couche de décor externe 35 et une couche de renfort 36 sont assemblées entre les deux plateaux 37, 38 par application de pression et chaleur. On peut ajouter d'autres couches de renfort. Le produit obtenu en sortie est un complexe 39.

Eventuellement dans cette étape on peut prévoir un film de colle entre la couche de décor externe et la couche de renfort ainsi qu'un film de colle à la face visible de la couche de renfort ou tout autre couche additionnelle par exemple une couche de non tissé polyester qui viendra ultérieurement au contact du noyau pour favoriser l'adhésion mécanique avec la mousse du noyau. D'autres techniques d'assemblage peuvent être utilisées. Par exemple on pourrait assembler les couches en continu entre deux rouleaux de calandrage qui exercent de la pression et de la chaleur.

Ensuite on réalise la découpe à la longueur et la largeur du ski.

Dans une étape suivante le complexe 39 est réchauffé par exemple par une rampe de chauffage à infrarouges 40 puis il est placé dans un moule 42 de mise en forme de la coque. Le moule comprend une matrice 43 et un poinçon 44. Le poinçon est abaissé dans l'évidement de la matrice, et il exerce une action de pression sur le complexe qui se déforme de façon à remplir l'espace résiduel entre le poinçon et la matrice.

Si le temps de transfert entre le chauffage et la mise en moule est suffisamment rapide, le moule n'a pas besoin d'être chauffé. Dans ce cas le moule met en forme la coque puis contribue à son refroidissement, et donc à la solidification de la résine.

Par exemple le complexe est chauffé à une température de 100 à 120 degrés par la rampe à infrarouges, puis il est placé dans le moule de mise en forme qui se trouve à une température ambiante. Ces chiffres ont seulement une valeur indicative.

En variante le moule peut être chauffé avant ou pendant la mise en forme de la coque pour faciliter la déformation du complexe 39. Puis il est refroidit pour provoquer la solidification de la résine.

Ensuite, la coque 48 est extraite du moule pour être assemblée au sous-ensemble inférieur 7.

Le sous-ensemble inférieur 7 comprend une semelle de glisse et une structure de renfort 12, une ou plusieurs couches de renfort. Ces couches sont de tout type approprié. Elles peuvent être composites, avec une matrice en résine thermodurcissable ou thermoplastique, ou encore elles peuvent être formées par une lame métallique, ou encore une superposition de couches.

Dans le cas d'un renfort à matrice thermoplastique on utilisera de préférence une matrice en polyuréthane thermoplastique de même nature que pour le renfort supérieur. L'intérêt d'une résine thermoplastique est ici moins important dans la mesure où le sous-ensemble inférieur ne subit pas une mise en forme particulière. L'assemblage peut se faire par pressage à chaud comme pour le sous-ensemble supérieur.

La coque 48 et le sous-ensemble 7 sont ensuite placés avec les carres 11 et 12 dans un moule d'injection 50 qui comprend une coquille inférieure 51 et une coquille supérieure 52. De préférence les coquilles sont usinées avec des évidements pour recevoir les éléments inférieur et supérieur du ski et pour lui donner sa cambrure finale.

En variante les carres 10 et 11 peuvent être assemblées au sous-ensemble inférieur dans l'étape précédente de ce sous-ensemble.

On peut également ajouter des renforts locaux dans le moule.

Dans le moule d'injection la coque 48 et le sous-ensemble inférieur 7 forment une enceinte fermée dans laquelle on injecte les composants d'une mousse durcissable pour former le noyau 6. Par exemple on injecte des isocyanates et des polyoles pour former une mousse de polyuréthane après expansion et polymérisation. En variante on peut injecter les composants d'une mousse phénolique ou autre.

La polymérisation de la mousse est une réaction exothermique, mais pour faciliter cette opération on peut chauffer le moule, par exemple à une température de 50 à 60 degrés.

Pour faciliter l'adhérence entre le noyau et les structures de renfort inférieur et supérieur on peut prévoir des films de colle ou des films compatibilisants additionnels entre ces différents éléments. Egalement

Selon une variante de mise en oeuvre, au lieu d'un noyau injecté dans le moule d'injection on peut prévoir un noyau en dur qui est mis en forme par moulage ou par usinage préalablement à l'assemblage des sous-ensembles supérieur et inférieur. Par exemple on peut prévoir de mettre en forme la coque sur un poinçon formé par le noyau lui-même comme cela est décrit par exemple dans le document FR 2 629 352.

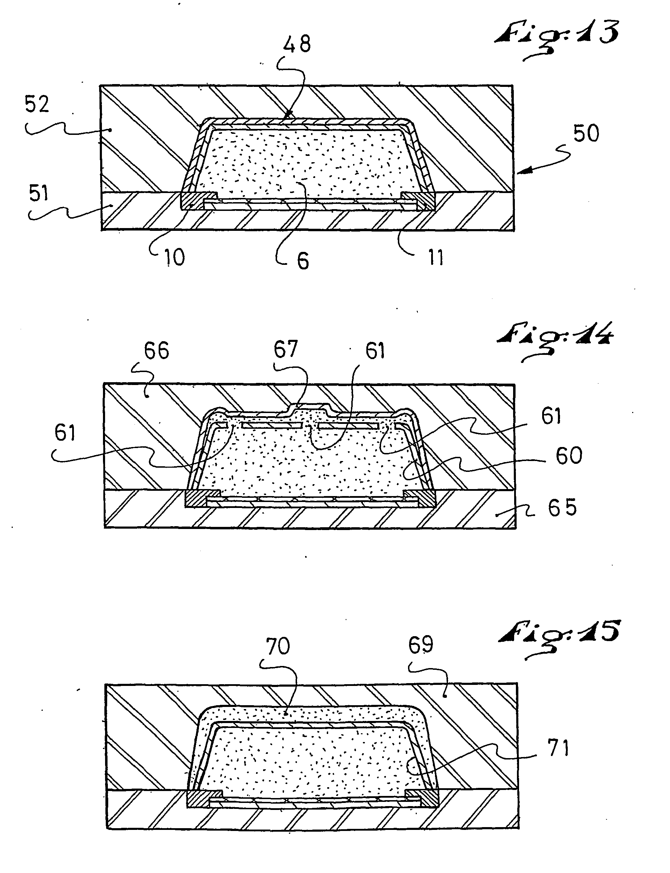

Selon une autre variante illustrée en figure 14, on ne réalise pas l'étape d'assemblage de la couche de renfort et de la couche de décor. Par contre, la couche de renfort 60 supérieure présente des perforations 61.

Le fait que la couche ait une matrice thermoplastique permet de réaliser aisément ces perforations en jouant sur l'état de la matrice. Les perforations sont réalisées sur la partie de la couche de renfort qui formera la face supérieure du ski, éventuellement sur les faces latérales.

La mise en forme de la coque se fait comme cela a été décrit précédemment. Les perforations peuvent être faites avant, après ou même au cours de cette opération.

Pour l'assemblage final du ski on utilise un moule ayant deux coquilles 65 et 66. La coquille inférieure 65 reçoit les éléments du sous-ensemble inférieur du ski. La coquille supérieure 66 présente un évidement dont les dimensions en section sont au moins localement plus grandes que celles de la coque, pour qu'il y ait un vide entre la coque et la coquille. Comme cela est illustré dans la figure, l'évidement de la coquille 66 peut présenter un relief.

Dans ce vide on a placé la couche de décoration.

A l'injection de la mousse, la mousse remplit le volume entre les deux sous-ensembles, également elle traverse la couche de renfort supérieure 60 par les perforations et repousse la couche de décoration 67 contre la paroi de la coquille supérieure 66.

Selon la variante de la figure 15, la coquille supérieure 69 présente également en section des dimensions supérieures à celles de la coque. On réalise une deuxième injection de polyuréthane dans l'espace vide entre la coque et la coquille du moule pour former une seconde coque 70 coulée sur le renfort supérieur 71.

Naturellement la présente description n'est donnée qu'à titre indicatif et l'on pourrait adopter des variantes de mise en oeuvre sans pour autant sortir du cadre des revendications.

En particulier l'invention n'est pas limitée à la fabrication d'un ski à structure coque.
Elle s'applique également aux skis de type sandwich ou caisson. Elle s'applique également à la fabrication de planches de glisse telle que des surfs de neige ou des skis courts.

## Revendications

1. Procédé de fabrication d'un engin de glisse comprenant une étape de superposition dans un moule d'un sous-ensemble inférieur (7), d'un noyau (6) et d'un sous-ensemble supérieur (8), **caractérisé par le fait qu'**il comprend une étape préalable de réalisation d'une couche de renfort composite (22, 30, 34) formée par un renfort (15, 25, 31) noyé dans une matrice de résine thermoplastique où la résine est de type PU (polyuréthane) ayant un module de flexion propre supérieur à 1 500 MPa, de préférence 2 000 MPa, et **par le fait que** la couche de renfort composite est réalisée soit par pressage à chaud du renfort (15) et de films en PU thermoplastique (16, 17), ou soit par déposition d'une poudre de polyuréthane thermoplastique sur le renfort (25).

2. Planche de glisse dont les sous-ensembles inférieur (12, 15) et supérieur ont chacun une structure de renfort ayant une couche de renfort formée par un renfort noyé dans une matrice de résine thermoplastique **caractérisée par le fait que** la résine est de type PU (polyuréthane) ayant un module de flexion propre supérieur à 1 500 MPa, de préférence 2 000 MPa, et **par le fait que** la couche de renfort (60) présente des perforations (61).

## Claims

1. Method for manufacturing a gliding apparatus including a step of superimposing a lower sub-assembly (7), a core (6), and an upper sub-assembly (8) in a mold, **characterized in that** it includes a preliminary step of making a composite reinforcement layer (22, 30, 34) formed by a reinforcement (15, 25, 31) embedded in a thermoplastic resin matrix in which the resin is of the PU (polyurethane) type having a specific flexural modulus greater than 1,500 Mpa, preferably 2,000 Mpa, and **in that** the composite reinforcement layer is made either by hot pressing the reinforcement (15) and the films (16, 17) made of thermoplastic PU, or by depositing a thermoplastic polyurethane powder on the reinforcement (25).

2. Gliding board whose lower (12, 15) and upper sub-assemblies each have a reinforcing structure having a reinforcement layer formed by a reinforcement embedded in a thermoplastic resin matrix, **characterized in that** the resin is of the PU (polyurethane) type having a specific flexural modulus greater than 1,500 Mpa, preferably 2,000 Mpa, and **in that** the reinforcement layer (60) has perforations (61).

## Patentansprüche

1. Verfahren zur Herstellung einer Vorrichtung zum Gleiten, umfassend eine Überlagerungsstufe in einer Form einer unteren Untereinheit (7), einen Kern (6) und eine obere Untereinheit (8), **dadurch gekennzeichnet, dass** es eine Vorverwirklichungsstufe einer Kompositverstärkungsschicht (22, 30, 34) umfasst, welche durch eine Verstärkung (15, 25, 31) gebildet ist, die in einer thermoplastischen Harzmatrix eingebettet ist, in der das Harz vom Typ PU (Polyurethan) ist, mit einem Biegemodul oberhalb 15000 MPa, vorzugsweise 2000 MPa, und **dadurch**, dass die Kompositverstärkungsschicht durch Warmpressen der Verstärkung (15) und aus thermoplastischen PU-Schichten (16, 17) hergestellt ist, oder durch Ablagerung eines thermoplastischen Polyurethanpulvers auf der Verstärkung (25).

2. Gleitbrett, dessen untere (12, 15) und obere Unteranordnungen jeweils eine Verstärkungsstruktur mit einer Verstärkungsschicht aufweisen, die aus einer Verstärkung gebildet ist, die in einer thermoplastischen Harzmatrix eingebettet ist, **dadurch gekennzeichnet, dass** das Harz von der Art vom Typ PU (Polyurethan) mit einem eigenen Biegemodul oberhalb von 1500 MPa ist, vorzugsweise 2000 MPa, und **dadurch**, dass die Verstärkungsschicht (60) Perforationen (61) aufweist.
